Europäisches Patentamt

European Patent Office

Office européen des brevets

(11) Publication number: 0 351 026
A2

# EUROPEAN PATENT APPLICATION

(21) Application number: 89201876.3

(22) Date of filing: 14.07.89

(51) Int. Cl.4: C08L 63/00 , C08L 101/00 , C08J 5/04 , C08K 7/00

(30) Priority: 15.07.88 US 219209
09.12.88 US 281768

(43) Date of publication of application:
17.01.90 Bulletin 90/03

(84) Designated Contracting States:
DE FR GB IT NL SE

(71) Applicant: AMOCO CORPORATION
200 East Randolph Drive
Chicago Illinois 60680(US)

(72) Inventor: Hecht, Daniel H
58 Marlborough Ave
Middlesex NJ 08846(US)
Inventor: Gardner, Hugh C
1273 Millstone River Road
Somerville NJ 08876(US)
Inventor: Qureshi, Shahid P
5 Surrey Lane
Piscataway, NJ 08854(US)
Inventor: Manders, Peter W
141 Center Street
Clinton NJ 08809(US)
Inventor: Newman-Evans, Richard H
146 Capricorn Drive Apt 2
Somerville NJ 08876(US)

(74) Representative: de Bruijn, Leendert C. et al
Nederlandsch Octrooibureau
Scheveningseweg 82 P.O. Box 29720
NL-2502 LS 's-Gravenhage(NL)

(54) Fiber-reinforced composites toughened with elongated rigid particles.

(57) Layered, fiber-reinforced composites are toughened by including elongated particles such as flakes or flock. The method of the invention is particularly effective in improving the toughness of composites based on thermoset matrix resins.

## FIBER-REINFORCED COMPOSITES TOUGHENED WITH ELONGATED RIGID PARTICLES

### BACKGROUND OF THE INVENTION

This invention relates to composite materials and more particularly to tough, impact resistant fiber-reinforced composites. Still more particularly, this invention relates to methods for toughening fiber reinforced composites and to particles useful in toughening such composites.

Fiber-reinforced composites are high strength, high modulus materials which are finding wide acceptance for use in sporting goods and in producing consumer items such as appliances. Such materials are also finding increased acceptability for use as structural components in automotive applications, as components of buildings and in aircraft. Typically, the composites used in structural applications comprise structural fibers in the form of continuous filaments or woven cloth embedded in a thermosetting or thermoplastic matrix. Such composites may exhibit considerable strength and stiffness, and the potential for obtaining significant weight savings makes them highly attractive for use as a metal replacement. However, acceptance for many structural applications has been limited by the fact that many of the composite materials presently available are brittle. The inability of such composites to withstand impact while retaining useful tensile and compression strengths has been a serious problem for many years. Compensating for the low impact resistance of such materials may ordinarily be accomplished by increasing the amount of material employed. This approach increases costs, reduces the weight savings that might otherwise be realized and may make them unacceptable for many uses.

The composites industry has long been involved in finding ways to overcome these deficiencies. Considerable effort has been expended over the past two decades directed toward the development of composites with improved fracture toughness. Inasmuch as most of the commonly employed matrix resins, as well as many of the reinforcing fibers, are generally brittle, much of that effort has gone into a search for components having better toughness characteristics. As a consequence, the search for toughened matrix resins has become the subject of numerous recent patents and publications.

For decades, the plastics industry has used rubber modifiers to toughen rigid, frequently brittle thermoplastic and thermoset engineering resins. Most often the rubber is dispersed in the form of particles throughout the rigid resin. Various means for altering the interaction between the rubber particle and the rigid phase to improve the effectiveness of the rubber component have also been explored. For example, the rubber components have been modified by grafting to change compatibility with the rigid phase, and adding reactive functional groups to the rubber to promote bonding to the rigid phase has also been shown to be effective. Other approaches have included the combining of dissimilar resins, forming blends and alloys with improved properties.

The methods used for toughening engineering resins have been adapted for the toughening of the matrix resins commonly used in composite structures, as shown for example by Diamont and Moulton in "Development of Resin for Damage Tolerant Composites - A Systematic Approach", 29th National SAMPE Symposium, April 3 - 5, 1984. The forming of alloys and blends by adding a more ductile thermoplastic such as a polysulfone to an epoxy resin formulation has also been shown to improve the ductility of the epoxy resin and provide enhanced toughness, according to British patent 1,306,231, published February 7, 1973. More recently, combinations of an epoxy resin with terminally-functional thermoplastics were shown to exhibit enhanced toughness. See U.S. patent 4,498,948. Still more recently, curable combinations of epoxy resins and thermoplastics with reactive terminal functionality were also said to improve the toughness of specifically-formulated matrix resins, provided that the neat resin after curing exhibits a specific phase-separated morphology having a cross-linked glassy phase dispersed within a glassy continuous phase. See U.S. patent 4,656,208. Further improvements are said to be achieved by including a reactive rubber component which is said to be contained within the cross-linked dispersed glassy phase. See U.S. patent 4,680,076.

Although the addition of rubber, thermoplastics and the like generally improves the ductility and impact resistance of neat resins, the effect on the resulting composites is not necessarily beneficial. In many instances the increase in composite toughness may be only marginal, and a reduction in high temperature properties and in resistance to environmental extremes such as exposure to water at elevated temperatures frequently is seen. Composite structures that rely on complex manufacturing methods or on unique resin morphologies that are difficult to reproduce for achieving improvements in toughness may require an impractical degree of control during fabrication, adding to the production costs and often resulting in erratic performance and poor reliability.

An alternative approach to producing toughened composites has been the development of layered composite structures having layers formed of fibers imbedded in a matrix resin alternated with layers formed of a thermoplastic resin, described in Japanese patent application 49-132669, published May 21, 1976. More recently, in U.S. patent 4,604,319, there were disclosed layered fiber-resin composites having a plurality of fiber-reinforced matrix resin layers inter-leafed with thermoplastic layers adhesively bonded to the reinforced matrix resin layers. Inter-leaf structures are ordinarily produced by impregnating continuous fiber to form prepreg, then laying up the composite by alternating prepreg with sheets of thermoplastic film. The laid-up structure is then subjected to heat and pressure, curing the matrix resin and bonding the layers. The patent also discloses inter-leaf layers which comprise a thermoplastic filled with a reinforcing material such as chopped fibers, solid particles, whiskers and the like.

Although inter-leafed composite structures with improved toughness have been disclosed, there has been some sacrifice in other physical properties, including a reduction in glass transition temperatures together with an increase in creep at high temperatures. Further difficulties with such composites may include a loss in stiffness for many such compositions, adhesive failure that may occur between layers formed of dissimilar resins and property deterioration during use due to poor solvent resistance. In addition, prepregs based on thermoplastic resin generally are lacking in tack, which complicates their fabrication into composites and increases the degree of skill needed to fabricate complex structures. This may in turn result in increased scrap losses and a need for more complex quality control procedures, increasing manufacturing costs in order to achieve an acceptable level of reliability.

The compositions and methods presently available for producing toughened composites thus require further improvement. Composites having improved resistance to impact and particularly those with better compressive strength after impact would be a useful advance in the art, and reliable methods for producing such toughened composites could find rapid acceptance, displacing the more complex and expensive manufacturing processes currently available for these purposes.

## SUMMARY OF THE INVENTION

The present invention is directed to layered composite structures comprising continuous fiber and a matrix resin formulation toughened by including elongated particles formed of a finely-divided, rigid material. More particularly, the invention is directed to matrix resin formulations filled with elongated particles for use in producing toughened composite structures, and to a method for toughening layered composites formed of a plurality of spaced-apart, discrete layers or plies comprising continuous fiber imbedded in a matrix resin by adding elongated particles to the matrix resin within the inter-ply spacing of the layered composite before curing. The particles are adapted in shape to bridge the openings between individual filaments of the continuous fiber component of a composite structure and be retained within the interply spacing during composite fabrication. The resulting composite structures exhibit a marked and unexpected improvement in toughness.

## DETAILED DESCRIPTION

The toughened composite structures of this invention comprise discrete layers formed of continuous fiber embedded in a matrix resin, the layers being separated or spaced normally apart by laminar regions or layers comprising matrix resin filled with elongated particles.

## The Matrix Resins

The matrix resins useful in forming toughened composites according to the practice of this invention are the resin formulations commonly used in the fiber-reinforced composites art and may include both thermosetting and thermoplastic materials. However, thermosetting resins will be preferred for most applications and the thermoset resins useful in this application will include those most commonly employed for making fiber reinforced composites such as epoxy resins, cyanate resins, bismaleimide resins, BT resins comprising a combination of cyanate and bismaleimide resin components, mixtures of such resins and the like, as well as the widely used cross-linkable polyester resins. Many thermoset resins generally possess low ductility and consequently are quite brittle. Composite structures based on such resins are therefore greatly benefited when toughened according to the teachings of this invention.

The preferred matrix resin formulation will thus be based on a thermoset resin and in particular on the well known and widely used epoxy formulations comprising in general an epoxy resin and an appropriate curing agent such as a diamine hardener or the like. The epoxy formulations may optionally include an appropriate curing agent and such additional components as are commonly employed in the thermoset composite art.

The epoxy resins which may be employed are curable epoxy resins having a plurality of epoxy groups per molecule. Such resins are commonly employed for producing composite materials, and many are readily available from commercial sources. Examples of such resins are polyglycidyl compounds, including the reaction products of polyfunctional compounds such as alcohols, phenols, carboxylic acids, aromatic amines or aminophenols with epichlorohydrin, and epoxidized dienes or polyenes. Further examples include cycloaliphatic epoxides, such as the reaction products of polyfunctional cycloaliphatic carboxylic acids with epichlorohydrin, cycloaliphatic epoxides, cycloaliphatic epoxy ethers and cycloaliphatic epoxy esters. Mixtures of epoxy resins may also be used. Preferred epoxides include Bisphenol A epoxides, epoxy novolacs, cycloaliphatic epoxy ethers and glycidyl amines. A wide variety of these epoxy resins are available from commercial sources under trade names such as PGA-X from Sherwin Williams Company, DEN 431 from Dow Chemical Company, Glyamine 125 from F.I.C. Corp. and MY-720 from Ciba-Geigy Corp.

Diamine hardeners which may be used include the aromatic diamines conventionally employed in formulating epoxy resins, such as for example, 4,4′-diaminodiphenyl ether, 4,4′-diaminodiphenyl methane, 4,4′-diaminodiphenyl sulfone, 3,3′-diaminodiphenyl sulfone, p-phenylene diamine, m-phenylene diamine, 4,4′-bis(aminodiphenyl) propane, 4,4′-diaminodiphenyl sulfide, trimethylene glycol bis(p-aminobenzoate) and the like, as well as their various position isomers. Also useful are the variety of polynuclear aromatic diamine hardeners such as those disclosed for example in U.S. patents 4,579,885 and 4,517,321, and U.S. patent 4,686,250, all incorporated herein by reference, as well as xylylene diamine, bis(aminomethyl) cyclohexane, dicyandiamide and the like. The various diamine hardeners may be used alone or in combination.

Suitable epoxy resin formulations may be prepared according to methods and practices well known and widely used in the resin art. Generally the matrix resin formulations will comprise greater than 2 parts by weight (pbw) diamine hardener per hundred parts by weight epoxy resin. Although the particular level selected will depend upon the particular diamine employed, preferably at least 3 pbw and more preferably from about 6 to about 150 pbw diamine hardener per hundred pbw epoxy resin will be used. The amount of each component selected will depend upon the molecular weights of the individual components and the molar ratio of reactive amine (N-H) groups to epoxy groups desired in the final matrix resin system. For most prepreg and composite applications, sufficient diamine hardener will be used to provide a molar ratio of N-H groups to epoxide groups in the range of from about 0.3/1 to 1.8/1, preferably from 0.4/1 to 1.3/1.

The formulations may further include a thermoplastic polymer. Such materials may contribute to the toughness of the resulting composite by increasing the ductility and impact resistance of the cured resin formulation. Thermoplastics may also be effective to increase the viscosity and film strength of the uncured resin, thus improving the resin processability during impregnating operations and the handling of the prepreg during composite manufacture. Although any of a variety of thermoplastics known in the art for use in combination with epoxy resins may be employed, including for example polyaryl ethers such as polyaryl sulfones, polyether ketones, polyphenylene ethers and the like, as well as polyarylates, polyamides, polyamide-imides, polyether-imides, polycarbonates, phenoxy resins and the like, in order to be effective for improving the viscosity, processability and handling. characteristics the thermoplastic selected will be soluble in the uncured epoxy resin formulation. The proportion of thermoplastic employed will depend in part upon the thermoplastic selected and the particular end use envisioned. However, for most purposes, the formulation will comprise from 0 to 30 pbw of thermoplastic per 100 pbw of the combined diamine hardener and epoxy resin components.

The epoxy formulations may additionally include an accelerator to increase the rate of cure. Any of the accelerators known and used in the epoxy resin art may be employed in conventional amounts, including Lewis acid:amine complexes such as $BF_3$:monoethylamine, $BF_3$:triethanolamine, $BF_3$:piperidine and $BF_3$:2-methylimidazole; amines such as imidazole, 1-methyl imidazole, 2-methyl imidazole, N,N-dimethylbenzylamine and the like; acid salts of tertiary amines such as the p-toluene sulfonic acid:imidazole complex and the like, salts of trifluoromethane sulfonic acid such as FC-520 (obtained from 3-M Company), organophosphonium halides, dicyandiamide and 1,1-dimethyl-3-phenyl urea. Mixtures of such accelerators may also be employed. For some end uses it may also be desirable to include dyes, pigments, stabilizers, thixotropic agents and the like, and these and other additives may be included as needed at levels commonly practiced in the composite art. Upon curing, the matrix resin formulations, exclusive of any such particulate additives which may be employed, will form a substantially single, continuous rigid phase.

## The Fibers

The matrix resin formulation will be combined with continuous fiber reinforcement or structural fibers and a particulate modifier in forming toughened composites according to the practice of this invention. Suitable fibers may be characterized in general terms as having a tensile strength of greater than 7,000 $kg/cm^2$ and a tensile modulus of greater than two million psi. Fibers useful for these purposes include carbon or graphite fibers, glass fibers and fibers formed of silicon carbide, alumina, titania, boron and the like, as well as fibers formed from organic polymers such as for example polyolefins, poly(benzothiazole), poly(benzimidazole), polyarylates, poly(benzoxazole), aromatic polyamides, polyaryl ethers and the like, and may include mixtures comprising two or more such fibers. Preferably the fibers will be selected from carbon fibers and aromatic polyamide fibers such as the fibers sold by the DuPont Company under the trade name Kevlar. The fibers may be used in the form of continuous tows of typically from 500 to 420,00 filaments, as continuous unidirectional tape or as woven cloth.

## The Particulate Modifiers

The particles employed in the practice of this invention comprise a finely-divided, rigid material, and may be described as elongated, meaning that at least one dimension of the particle will be substantially greater than the particle's smallest dimension. The particles may be elongated in a single dimension as in fibers, whether cylindrical, prismatic or irregular in form, or in two dimensions as in flakes, including platelets, disks and the like. The particles may be regular or irregular in cross section and will preferably have an aspect ratio or ratio of longest to smallest dimension greater than 2:1. Examples of suitable elongated particles include short fibers and fiber-like particles such as are found in flock, fiber pulp, fibrils and the like, as well as flake and flake-like materials represented by fragments of film, chips, mechanically-flattened particles and the like.

The elongated, rigid particles may be formed of any convenient rigid material including rigid resins, vitrified or graphitized solids, crystalline minerals, metals, ceramics, and the like. Many such materials are readily available in suitable form from commercial sources.

Rigid resins which may be useful either directly or as precursors in forming such particles include fully or partially cured, rigid thermoset resins, rigid thermoplastic resins and mixtures of such resins. The resins are characterized as rigid, meaning that the resin selected will have, in its final particle form, sufficient thermal resistance, hardness and rigidity to resist being melted, compressed or flattened under the pressures and temperatures that will be encountered during the fabricating and curing of the laminate. Soft or rubbery resins having glass transition temperatures below about 15° C or hardness values below about D-50 (Shore), and resins having a melt temperature substantially below the expected processing temperature may melt or significantly soften during composite fabrication and thus will not be suited for use as particles in the practice of this invention. Where the particles will be dispersed in the matrix resin formulation and then applied to the fiber reinforcement or prepreg, the particles will necessarily be formed of a material selected to be substantially insoluble in the matrix resin formulation prior to gelation. Many fiber-forming rigid resins are readily available commercially in the form of chopped fiber or flock, or may be obtained in filament or fiber form and then processed by ordinary means to provide a suitable flock.

Representative of the thermoset, thermoplastic and natural materials that may be useful in the form of flock or fiber pulp as elongated rigid particles for toughening composites include rayon fiber, olefin fiber, both aromatic and aliphatic polyamide fiber, acrylic fiber, phenolic fiber, polyacrylonitrile fiber, pitch fiber and the like, as well as jute, cotton, wool and similar natural fiber. Many such fibers may be oxidized, carbonized, graphitized or otherwise treated to thermoset, insolubilize and further transform the fibers and provide additional fibers which may be used to form elongated particles suitable for the practice of this invention including, for example, carbonized rayon fiber, thermoset or oxidized polyacrylonitrile fiber, and carbon or graphite fiber derived by carbonizing or graphitizing fiber formed from polyacrylonitrile, a petroleum or coal tar pitch or the like.

The rigid thermoset and thermoplastic resins may also be formed into film by well known methods and chopped to provide flake suitable for use as the shaped particulate modifier, and resins having adequate ductility may be molded and flaked in commercial equipment, or formed into particles and then subjected to pressure using mill rolls or the like, usually with heating, to form flake-like particles.

Similar methods may be employed to produce metal particles in the form of fiber, flock and flake, and a variety of naturally-occurring minerals are available in a suitable crystalline or fiber-like form, and these materials may be useful as elongated particles. Vitreous and graphitic solids in the form of fibrils and flakes are known in the art, including a variety of fibers, flakes and fibrils formed of silica, graphite, carbon, carbonized resin, carborundum, alundum, boron and boron-containing compounds and the like, many of which are available from commercial sources, and these may also be useful for the purposes of this invention. Some of these materials may be extremely hard and capable of cutting or otherwise damaging most continuous fiber reinforcement, particularly during fabrication, and the use of such materials will therefore not be preferred except for use with fiber reinforcement of equal or greater hardness.

Good adhesion between the elongated particle and the matrix resin may enhance the effectiveness of the particle in toughening composites. Many of the particle precursor materials are known in continuous fiber form to exhibit good adhesion to thermoset matrix resins, which may be an inherent characteristic of the fiber or the result of a surface treatment or sizing of the fiber, and particles formed from such precursors may be particularly desirable for use in the practice of this invention. It may also be desirable to modify the surfaces of the elongated particles or their film or fiber precursors to include functional groups capable of reacting with the matrix resin and thereby becoming chemically bound. Alternatively, suitable particles may be formed of resins containing copolymerized carboxylic acid or carboxamide functionality or the like, or from one of the variety of phenolic and melamine resins that may remain usefully reactive with the matrix resin even after curing. Surface modification of the particle or its precursor may improve adhesion by chemically binding the matrix resin to the particle surfaces or by improving the affinity of the particle for the matrix resin due to the presence of polar groups at the particle surface.

The Composite Structures

The toughened composite structures of this invention comprise discrete layers formed of continuous fiber embedded in a matrix resin, the layers or plies being separated or spaced normally apart, the layer surfaces defining laminar regions or spacing layers comprising matrix resin filled with the elongated particles. The particles serve to separate the plies, and the thickness of the ply spacing will thus be directly related to the particle size. Where the particles take the shape of a film fragment or flake, the particles may be either dispersed as a monolayer on the surfaces of the plies or stacked in brick-like fashion, depending upon the method of fabrication selected; the ply spacing that results will then be a multiple of the thickness of the flake. While cylindrical particles such as chopped fiber, flock or fibrils may become entangled and felted, giving a spacing substantially greater than the cross sectional dimension of the particles, the preferred cylindrical particles will be of a character and size such that entanglement and felting do not occur.

The filled resin spacing layers separating the plies will have an average thickness lying in the range of from about 1 microns to about 75 microns. It appears that the effectiveness of such filled matrix resin layers in toughening the composite may be greatest for layers substantially uniform in thickness, which could best be accomplished by using particles which are substantially uniform in size. As used herein, the term particle size refers to the particle dimension determining the ply separation, ordinarily the particle thickness or smallest diameter. For fiber-like particles, particle size will be taken to refer to the diameter of the fiber, while for flake-like particles, the term refers to the thickness of the flake. Inasmuch as it will not be practical in most instances to obtain particles uniform in size throughout, the particulate modifiers will ordinarily comprise mixtures of particles encompassing a variety of particle sizes, with the majority of the particles lying in the range of from 1 to about 75 microns, and these mixtures will be highly effective in toughening composites.

The proportion of each component employed in fabricating the toughened composites of this invention will depend in part upon the end use envisioned, as well as on the particular resin, fiber and elongated particles selected. Overall, the composites will comprise from about 20 to about 80 wt% continuous fiber, the balance comprising matrix resin and particles, with the particles amounting to from 1 to about 25 wt% based on combined weight of the particles and the matrix resin formulation. Although the level of elongated particles needed to toughen the composite will lie within the stated range, the optimum level will necessarily vary depending upon the type of matrix resin, the fiber loading, the particle type and similar factors and must therefore be determined for the particular fiber and resin system employed. In general it will be desirable to employ the lowest level of particles that will impart the desired improvement in composite toughness. Although greater than optimum levels may be employed, further improvements in toughness will be marginal, and other physical properties such as hot/wet strength may be detrimentally affected. The method of this invention for toughening composites provides composites having a very high fraction of the particles located in the interply spacing, and thus lends itself well to providing improvements in toughness at a minimum level of particles.

## Composite Fabrication

Methods ordinarily used for the production of layered composites may be readily adapted for fabricating the composites of this invention. Most commonly, such composites are formed from impregnated tape comprising uniformly disposed, parallel filaments of continuous fiber, or from resin-impregnated fabric woven from continuous fiber tow. These impregnated fiber structures, designated prepreg, may be produced by impregnating tape or fabric with matrix resin formulation in an uncured state using any convenient method including melt coating, calendaring, dip impregnation with a resin solution or molten resin, melt pressing the tape or fabric into a film of the matrix resin or the like.

The composite will then be formed by laying up sheets or tapes of the prepreg to form a layered stack or lay-up, and curing the lay-up, usually with heat and under pressure. The prepreg layers, each comprising continuous fiber and matrix resin in uncured form, will have their adjoining surfaces adhered upon curing to form a single structure having discrete layers of continuous fiber embedded in an essentially continuous and substantially homogeneous matrix resin phase.

In forming the toughened composites of this invention, it will be necessary to distribute the elongated particles uniformly between each of the prepreg layers. A variety of methods may be used for this purpose, and the placing of particles at a surface of the prepreg may be carried out as a separate step prior to or during the lay-up operation, or integrated into the step of impregnating the tape or woven fabric. The former will be referred to as two-step processes, while the latter are termed one-step processes.

Methods for carrying out the two-step process include physically distributing the particles by a sprinkling, spraying, spreading or similar operation on a surface of each prepreg tape or sheet during the lay-up operation; dispersing the particles uniformly in liquid matrix resin formulation and coating the mixture on a surface of the prepreg; forming a film of particle-filled matrix resin formulation and inter-leafing the prepreg layers with the film during the lay-up operation and the like. Two-step methods based on a coating or inter-leafing step provide added matrix resin, ensuring that adequate matrix resin is available to fill the laminar region between the plies formed by the particles.

In the alternative one-step method, the particles may be placed on a surface of the prepreg during the impregnation step by dispersing the particles into the matrix resin and then carrying out the impregnation step. In this process, a fiber structure having a surface layer of the filled resin may be formed, for example, by placing a film of filled resin on a surface of tape or fabric or by coating the filled resin directly onto the surface. The continuous fiber is then embedded in the matrix resin by heating the fiber-and-resin structure in a melt-pressing or ironing operation. The matrix resin becomes molten and a portion flows into the fiber structure, leaving behind at the tape or fabric surface matrix resin filled with those particles too large to enter the interstices of the fiber structure.

The one-step process may be viewed as a filtering operation whereby the fiber structure acts as a filter, passing matrix resin while retaining at the surface those particles larger than the openings between the fibers. The elongated particles of this invention comprise flake or cylindrical, fiber-like particles which will be particularly effective for use in such one-step processes inasmuch as these particles will be capable of bridging the openings between the continuous filaments, thus being retained at the surface of the prepreg.

As previously noted, other than the adaptations needed to introduce the particles, the lay-up and curing steps used in preparing the toughened composite structures will be conventional. These process steps may be carried out using any of the variety of conventional processing devices and equipment and employ such conventional process steps, adaptations and modifications as are ordinarily employed in the composite art.

The invention will be better understood by consideration of the following Examples, which are provided by way of illustration. In the Examples, all parts are by weight, and all temperatures are given in Centigrade unless otherwise noted.

## EXAMPLES

The following materials and formulations are employed in the Examples.

### Epoxy Resin Formulations

| component | pbw |
|---|---|
| **EP-1:** | |
| bis (2,3-epoxycyclopentyl) ether, epoxy resin | 40.8 |
| 4,4'-bis(3-aminophenoxy) diphenyl sulfone, amine hardener | 48.1 |
| BF3:TEA  boron trifluoride:triethanolamine complex; curing aid/accelerator | 0.9 |
| PEI  Polyether imide obtained as Ultem 1000 from General Electric Company | 10.2 |

```
                                    total:       100.0
```

EP-2:

bis (2,3-epoxycyclopentyl) ether,     .          41.8
epoxy resin

4,4'-bis(3-aminophenoxy) diphenyl sulfone,        49.4
amine hardener

BF3:TEA   see EP-1                                 0.9

PEI   see EP-1                                     7.9

```
                                    total:       100.0
```

EP-3:

bis (2,3-epoxycyclopentyl) ether,                 42.0
epoxy resin

4,4'-bis(3-aminophenoxy) diphenyl sulfone,        49.7
amine hardener

BF3:TEA; see EP-1                                  0.9

PEI; see EP-1                                      7.4

```
                                    total:       100.0
```

Particles

| abbrev. | composition |
|---|---|
| Flock-1 | precision cut 3 denier Nylon fiber flock, 500 microns in length, from Flock Industries Inc. |
| Flock-2 | precision cut oxidized polyacrylonitrile fiber flock, 500 microns in length and about 6 microns in diameter, prepared by Flock Industries, Inc. from fiber supplied by Amoco Performance Products, Inc. |
| Flock-3 | precision cut carbon fiber flock, 500 microns in length and about 6 microns in diameter, prepared by Flock Industries, Inc. from fiber supplied by R.K. Textiles. |
| Flake-1 | Hexagonal flakes measuring about 0,2 mm. cut from 0.025 mm Ultem 1000 PEI film. |
| ABS-1 | Spray-dried particles of carboxylated styrene-butadiene-acrylonitrile terpolymer with approximately 0.038 equivalents of carboxyl functionality per 100 g of resin, Tg of 26° and ave. particle size 13 microns, as received; prepared from Hycar 1578X1 latex, by B.F. Goodrich Company. |

The flock and flake particles, in the form received, generally included surface contaminants such as process oils, cutting oils and the like used during the cutting or chopping operation. The contaminants were removed before use in fabricating composites, generally by rinsing the particles with methylene chloride followed by alcohol, and then drying the particles. Alternatively, the particles may be dispersed in warm (60° C) aqueous sodium carbonate for an hour, then collected by filtration, rinsed with solvents and dried.

## Fibers

Except where otherwise noted, the carbon fiber used in the Examples was Thornel® T650-42 grade carbon fiber from Amoco Performance Products, Inc. This fiber typically has a filament count of 12,000 filaments per tow, a yield of 0.44 kg/cm$^2$ a tensile strength of 51,100 kg/cm$^2$, a tensile modulus of 2.94 mpsi and a density of 1.78 g/ cm$^3$ In the Examples, ribbon formed from the fiber was used to prepare prepreg having fiber areal weights of 144 to 146 g/m$^2$.

## Test Procedures

Compression After Impact Test.

This procedure, referred to as the Compression After Impact test or CAI, is generally regarded as standard test method in the industry. The test specimens are panels measuring 15.2 x 10.2cm cut from the fiber-reinforced composite sheets. The panels are first impacted by being subjected to an impact of 680 cm-kg/cm at the center in a Gardner Impact Tester, using a 16 mm diameter indenter. The impacted panel is then placed in a jig and tested edgewise for residual compressive strength. The details are further described in "NASA Contractor Report 159293", NASA, August, 1980.

Glass Transition Temperature (Tg).

Values for Tg were obtained by standard differential thermal analysis (DTA) techniques; the heating rate was 10°C/ min.

The methods of the following Examples are representative of those that may be employed for preparing the resin formulations, prepreg and composites useful in the practice of this invention. The processes will be generally recognized by those skilled in the art as processes and methods commonly employed for the production of thermoset resin formulations and composites.

Control Example A

An EP-1 resin formulation was prepared by heating 40.8 parts by weight (pbw) of bis (2,3-epoxycyclopentyl) ether to 130°C while stirring, and then adding 10.2 pbw of Ultem 1000 polyether imide resin. Stirring and heating was continued at 130°C while the resin dissolved, about one hour, and then 48.1 pbw of 4,4'-bis (3-aminophenoxy) diphenyl sulfone were added, cooling the mixture to 90°C. The mixture was stirred and heated at 105° for about 10 minutes, then cooled to 80°C and 0.9 pbw of BF3 triethanolamine complex was added with vigorous stirring. After an additional 10 min.of stirring, the resin was discharged from the reaction vessel and cooled.

The thermosetting epoxy formulation was coated on 34.3 cm width silicone-coated release paper, obtained as W-89-SPT6BE/PST3A from Mead Release Products Company. The coating was made at a coating weight of 41 g/m², to provide two rolls of coated paper. A 30.5 cm wide ribbon of carbon fiber was formed from 105 tows of Carbon fiber. A prepreg machine was used to form the prepreg by sandwiching the ribbon between films from the two rolls and pressing to provide a tape having 67 wt.% carbon fiber, a fiber areal weight of 145 g/m², and a thickness of about 0.14 mm

The prepreg tape was laid up into 38.1 x 38.1 cm laminates with a ply configuration of [+45/90/-45/0]₄ₛ and cured in an autoclave under 6.3kg/cm² pressure at 179°C for 2 hr. The resulting composite panel, after cooling, was used to provide test specimens for Compression After Impact evaluations.

Control Example B and C.

Additional control composites were prepared using substantially the same procedures as those used for Control Example A, substituting the EP-3 (Example B) and EP-2 (Example C) epoxy resin formulations. Minor changes in handling were employed to accommodate slight differences in physical characteristics of the resin formulations, as will be readily understood by those skilled in the epoxy resin formulating art.

In preparing the prepreg of Examples 1 and 3, a one-step process was used in which the particulate modifier was mixed into the matrix resin and formed into films by a coating process. A dry fiber web was then sandwiched with two such filled resin films in a prepreg machine to provide prepreg having particles dispersed in the resin at both surfaces.

In Example 2, the composite was prepared using a two-step process in which a low resin content prepreg tape was first prepared, then coated with particles on one surface by physically sprinkling particles during the layup operation.

Example 1.

A filled EP-1 resin formulation was prepared by charging 49.4 pbw of epoxy/PEI solution (80/20 weight ratio) to a sigma blade mixer and mixing while heating to 100°C, then adding 3.2 pbw of Flock-1 particles. Mixing was continued until the flock particles were uniformly dispersed, then 46.5 pbw of 4,4'-bis (3-aminophenoxy) diphenyl sulfone were added over a 10 min period, and heating and stirring were continued an additional 20 min. After cooling the mixture to 80°C, 0.9 pbw $BF_3$:triethanol amine complex were added with stirring. Stirring was continued for an additional 10 min., after which the resin was discharged.

Films of the filled resin were formed by coating at a coating weight of about 43 $g/m^2$ and the procedures of Control Example A were substantially followed to provide a prepreg tape having a fiber areal weight of 145 $g/m^2$ and a resin content of 36.9 wt%. The majority of the flock particles were localized at the surfaces of the prepreg. Composite panels were formed substantially by the processes of Control Example A.

## Example 2.

Prepreg tape with a fiber content of 65 wt%, produced from carbon fiber and an EP-3 epoxy resin formulation substantially according to the procedures of the Control Example A, was laid up into 38.1 x 38.1cm laminates with a ply configuration of $[+45/90/-45/0]_{4S}$. During the lay-up operation, one surface of each ply was sprinkled with particles of Flake-1 to provide a substantially uniform single layer of flakes at a density of about 12 $g/m^2$. The flakes were formed of Ultem film and were hexagonal in shape, measuring approximately 0.2 mm across and having a thickness of 0.025 mm

The lay-up was then cured in an autoclave under 6,3 $kg/cm^2$ pressure at 179°C for 2 hr, providing a composite panel. Test specimens were cut from the resulting panel and tested as before. The composite composition and property data are summarized in Table I.

## Example 3.

A sample of EP-3 resin, 91 pbw, was charged to a sigma blade mixer and sheared for 10 min., to a resin temperature of 35°C, then 5.9 pbw of Flock-1 particles and 3.1 pbw of ABS-1 resin particles were added. After mixing about 20 min. to uniformly disperse the particles, the resin was discharged. Composites were prepared substantially following the procedures of Example 1. The composite composition and property data are summarized in Table I.

In Examples 4. - 6, composites were prepared using a 2-step process in which a film of the particle filled resin formulation was combined with a low resin content prepreg tape and passed through the prepreg machine to provide prepreg having particles dispersed in the resin at one surface.

## Example 4.

A frozen sample of EP-2 resin, 91 pbw, was charged to a sigma blade mixer and sheared until the resin reached a temperature of about 35°C and became homogeneous (for 10 min.), and then continued after adding 9 pbw of Flock-2 particles until the flock was uniformly dispersed and the resin temperature was about 40°C. A film of the filled resin was prepared at a coating weight of 30 $g/m^2$, and combined with prepreg tape having a fiber content of 73 wt% prepared from carbon fiber and EP-2 resin following the procedures of Example A, using a prepreg machine to give a prepreg tape having a fiber content of 68 wt% and a fiber areal weight of 148 $g/m^2$, with Flock-2 particles dispersed in the resin coating on one surface. Composites were prepared substantially by the procedures of Example 1 to provide test panels having a fiber volume fraction Vf of 61.1. The composite composition and property data are summarized in Table I.

## Example 5.

Prepreg tape having a fiber content of 73 wt%, prepared from carbon fiber and EP-2 resin, was sandwiched with two filled resin films of Example 4 to provide a final prepreg tape having a fiber content of 61 wt% and a fiber areal weight of 148 $g/m^2$. Composites were prepared substantially by the procedures of Example 1 to provide test panels having a fiber volume fraction Vf of 53.1. The composite composition and property data are summarized in Table I.

## Example 6.

A resin film filled with Flock-3 particles was prepared from 91 pbw of EP-2 resin and 9 pbw Flock-3 particles following substantially the process of Example 4. The film was combined with prepreg tape having a fiber content of 73 wt%, prepared from carbon fiber and EP-2 resin, to provide a final prepreg tape having a fiber content of 63 wt% and a fiber areal weight of 147 g/m$^2$. Composites were prepared substantially by the procedures of Example 1 to provide test panels having a fiber volume fraction Vf of 56.1. The composite composition and property data are summarized in Table I.

The compositions and physical properties of the composites of Examples 1 - 6 together with those of Control Examples A - C are summarized in the following Table I.

TABLE I

| Ex. No. | Epoxy | Filler (wt%) | Fiber (wt%) | thickness (mm) | CAI (kg/cm$^2$) |
|---------|-------|--------------|-------------|----------------|-----------------|
| A | EP-1 | none | 67.0 | 4.45 | 2,114 |
| 1 | EP-1 | Flock-1 3.2 | 63.1 | 4.65 | 3,045 |
| B | EP-3 | none | 63.7 | 4.52 | 2,212 |
| 2 | EP-3 | Flake-1 12.8 | 60.6 | 4.72 | 2,912 |
| 3 | EP-3 | Flock-1 5.9 and ABS-1 3.1 | 63.0 | 4.60 | 3,339 |
| C | EP-2 | none | 62.3 | 4.75 | 2,282 |
| 4 | EP-2 | Flock-2 9 | 68 | 4.32 | 2,898 |
| 5 | EP-2 | Flock-2 9 | 61 | 5.03 | 3,514 |
| 6 | EP-2 | Flock-3 9 | 63 | 4.70 | 3,171 |

Notes: EP-1, etc. are Epoxy formulations; these and the abbreviations for filler particles are summarized in text; Filler content is wt.% based on resin content plus filler; Fiber content is wt% based on total composite; CAI = Compression Af er Impact; see text for testing procedures.

It will be apparent from a consideration of the residual compressive strengths of the examples and a comparison with the corresponding control examples that spacing the plies of a layered composite by dispersing elongated particles in the matrix resin within the inter-ply spacing affords a substantial improvement in composite toughness. For example, the addition of flock and flake particles may produce an increase in CAI properties of from 700 to as much as 1,260kg/cm$^2$ as will be seen by comparing Example 1 with A, Example 2 with B and Examples 4 - 6 with C. The degree of improvement will depend in part on the particle level, as will be seen in Examples 4 and 5 wherein an increase in the proportion of filled epoxy resin, reflected by the increase in composite thickness and reduction in total fiber content of the composite, resulted in an increase in CAI of nearly 9 kpsi. Mixtures of elongated particles with other resin particles may produce improvements of similar magnitude as will be seen by comparing Example 3 with B. The level of improvement may also depend in part upon the surface characteristics of the particle and the uniformity with which the particles are dispersed in the matrix resin in the interlayer region. In separate composite preparations carried out substantially following the method of Example 2 but employing a metallized polyester flake, the improvement in CAI amounted only to an increase of about 140 kg/cm$^2$ Photomicrographic inspection showed the metallized flake to be poorly adhered to the matrix resin and poorly dispersed. Similarly, a composite based on a Nylon flock, Flock-1, and an epoxy resin derived from a mixture of tetraglycidyl and triglycidyl epoxy resins also provided an increase in CAI of only about 140 kg/cm$^2$ Again, a photomicrographic inspection of the composite showed the matrix resin to be poorly adhered to the flock, which in turn was not uniformly dispersed in the matrix resin.

The invention will thus be seen to be a matrix resin formulation filled with elongated particles for use in producing toughened fiber-reinforced composite structures, and a method for toughening such composites. The toughened composites comprise discrete layers formed of continuous fiber embedded in a matrix resin, the toughening of the composite being accomplished by including elongated particles in the matrix resin within the inter-ply spacing of the layered composite. The elongated particles, which may be selected from fiber, flake and mixtures thereof, will be formed of rigid material having sufficient rigidity and hardness to withstand the pressures and temperatures encountered in composite fabrication. The particles will comprise elongated particles in the range of from 1 to about 75 microns in size, defined as the particle's smallest dimension, and will be selected to have the majority of particles of a size to provide the desired inter-ply spacing, normally in the range of from 1 to about 75 microns. The method for toughening fiber reinforced composites of this invention may be applied to composites formed using a wide variety of conventional matrix resins in combination with fiber reinforcement. However, the preferred compositions will be based on thermoset matrix resins and more preferably on epoxy resin formulations.

Further modifications and variations will become apparent to those skilled in the resin formulating and composite fabricating art, and such variations and modifications will be included within the scope of the invention as defined by the appended claims.

## Claims

1. A curable matrix resin formulation comprising from 99 to 75 wt% of a thermoset resin, characterized in that it further contains from 1 to 25 wt% of flake or fiber flock particles having an aspect ratio greater than 2:1 and a smallest dimension in the range of from 1 to 75 microns formed of a rigid material selected from the group consisting of polyamide, polyimide, oxidized polyacrylonitrile, carbonized polyacrylonitrile, and mixtures thereof.

2. The curable matrix resin formulation of claim 1, characterized in that said thermoset resin is an epoxy resin formulation comprising 100 pbw of an epoxy resin having a plurality of epoxy groups, from 6 to 150 pbw of an amine hardener and from 0 to 30 pbw of a thermoplastic polymer.

3. A curable matrix resin formulation, characterized in that it comprises (a) from 99 to 75 wt% of an epoxy resin formulation comprising 100 pbw of a cycloaliphatic epoxy ether, from about 6 to 150 pbw of a diamine hardener and up to 30 pbw of a thermoplastic polymer, and (b) from 1 to 25 wt% of flake or flock particles having an aspect ratio greater than 2:1 and a smallest dimension in the range of from about 1 to 75 microns formed of a rigid material selected from the group consisting of polyamide, polyimide, oxidized polyacrylonitrile, carbonized polyacrylonitrile, and mixtures thereof.

4. The curable matrix resin formulation of claim 1 or 3, characterized in that said particles are fiber flock formed of fibers selected from the group consisting of polyacrylonitrile fibers, polyamide fibers, oxidized polyacrylonitrile fibers, carbon fibers, and mixtures thereof.

5. The curable matrix resin formulation of claim 1 or 3, characterized in that said particles are polyimide flakes.

6. A shaped article wholly or partially consisting of a curable matrix resin according to claims 1-5.

7. A shaped article wholly or partially consisting of a cured matrix resin according to claims 1-5.